# EUROPÄISCHE PATENTSCHRIFT

(11) **EP 0 572 854 B1**
(45) Veröffentlichungstag und Bekanntmachung des Hinweises auf die Patenterteilung: **08.11.1995**
(21) Anmeldenummer: 93107992.5
(22) Anmeldetag: 17.05.1993
(51) Int. Cl.: C09B 5/48

(54) **Verfahren zur Herstellung von Dianthrachinon-N,N'-dihydroazin und dessen Chlorierungsprodukten**
Process for the preparation of dianthraquinonyl-N,N'-dihydroazine and of its chlorinated derivatives
Procédé pour la préparation de la dianthraquinonyl-N,N'-dihydroazine et de ses dérivés chlorés

(30) Priorität: 30.05.1992 DE 4217954
(43) Veröffentlichungstag der Anmeldung: 08.12.1993
(73) Patentinhaber: BASF Aktiengesellschaft, 67063 Ludwigshafen (DE)
(72) Erfinder: Schmitt, Michael, Dr., W-6520 Worms 1 (DE)

(56) Entgegenhaltungen:
- DE-A- 3 422 385
- DE-B- 1 264 648
- CHEMICAL ABSTRACTS, vol. 107, no. 12, September 1987, Columbus, Ohio, US; abstract no. 98205w, 'Indanthrone' Seite 78-79 ; & JP-A-62 025 167 (MITSUI TOATSU CHEMICALS, INC.)

## Beschreibung

Die vorliegende Erfindung betrifft ein verbessertes Verfahren zur Herstellung von Dianthrachinon-N,N'-dihydroazin (I) 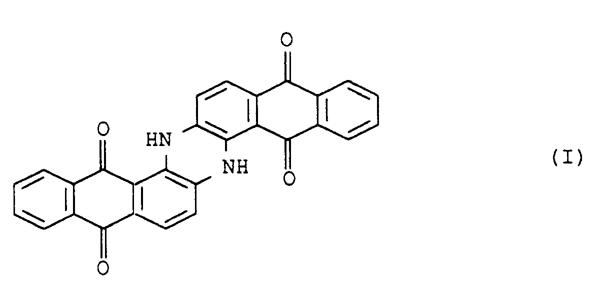
und dessen Chlorierungsprodukten (Ia) 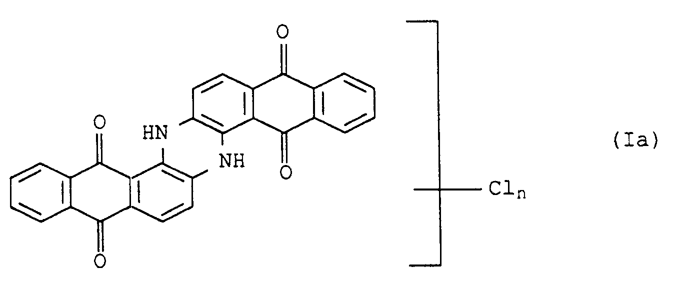
wobei n 1 oder 2 bedeutet, durch Kondensation von 1-Aminoanthrachinon (II) in Gegenwart eines alkalischen Kondensationshilfsmittels, eines Oxidationsmittels und eines cyclischen Harnstoffderivates bei 80 bis 150°C und anschließende Reinigung und/oder Chlorierung.

Die Anthrachinonderivate (I) und (Ia) entsprechen den wichtigen Küpenfarbstoffen C.I. Vat Blue 4 (C.I. 69800, üblicherweise als Indanthron bezeichnet) bzw. C.I. Vat Blue 14 (C.I. 69810, n=1) und C.I. Vat Blue 6 (C.I. 69825, n=2, 3,3'-Dichlorindanthron).

Die Herstellung von Indanthron kann sowohl durch Kondensation von 2-Aminoanthrachinon als auch von 1-Aminoanthrachinon erfolgen.

Bei dem herkömmlichen Herstellungsverfahren wird 2-Aminoanthrachinon in einer Natriumhydroxid/Kaliumhydroxid-Schmelze in Gegenwart von Oxidationsmitteln wie Natriumnitrat oder Natriumchlorat auf 200 bis 225°C erhitzt. Bei dieser Reaktion fallen jedoch erhebliche Mengen unerwünschter Nebenprodukte wie Alizarin, 2-Amino-1-hydroxyanthrachinon und Flavanthron an, weshalb alternative Verfahren, ausgehend von 1-Aminoanthrachinon, vorgeschlagen wurden.

Bei diesen neueren Verfahren wird 1-Aminoanthrachinon in einer Phenolat- oder Hydroxidschmelze vorzugsweise durch Luft oxidiert, wobei teilweise weitere Hilfsstoffe wie Dimethylsulfoxid eingesetzt werden. Aus der DE-A-34 22 385 ist ein Verfahren bekannt, bei dem die Kondensation von 1-Aminoanthrachinon in Gegenwart von 1,3-Dimethylimidazolidin-2-on erfolgt.

Jedoch können auch diese Verfahren aufgrund ebenfalls unzureichender Reinheit des Produktes und damit zu niedrigen Ausbeuten oder aufgrund der schlechten Filtrationseigenschaften des Produktes nicht befriedigen.

Die Herstellung der entsprechenden Chlorindanthrone kann bekanntermaßen durch Umsetzung von Indanthron mit Chlor in einem inerten, organischen Lösungsmittel wie Nitrobenzol oder in Schwefelsäure unter Zusatz von geringen Mengen Mangandioxid erfolgen. Auch hierfür muß das eingesetzte Indanthron ausreichende Reinheit haben, um zu einem zufriedenstellenden Chlorierungsprodukt zu führen. Daher wird das Kondensationsprodukt in der Regel einer reduktiven Reinigung und einer anschließenden Luftoxidation unterzogen.

Der Erfindung lag die Aufgabe zugrunde, Indanthron in guten Reinheiten und guten Ausbeuten in wirtschaftlicher Weise zugänglich zu machen und damit auch eine vorteilhafte Herstellung von Chlorindanthron zu ermöglichen.

Demgemäß wurde ein Verfahren zur Herstellung von Dianthrachinon-N,N'-dihydroazin (I) 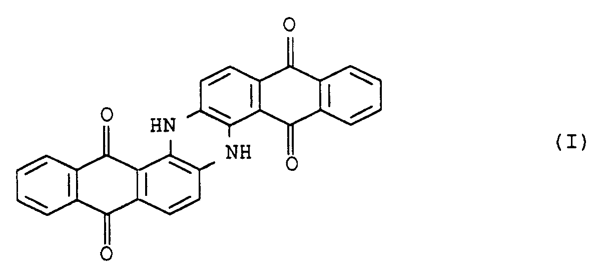
und dessen Chlorierungsprodukten (Ia) 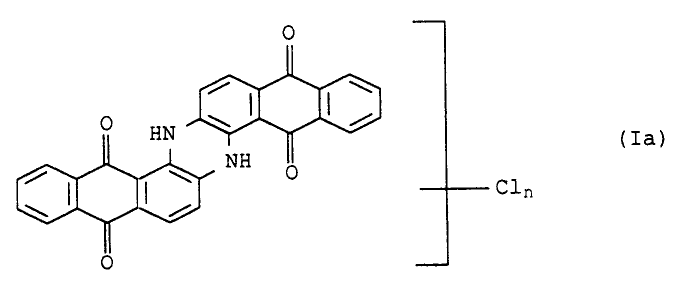
wobei n 1 oder 2 bedeutet, durch Kondensation von 1-Aminoanthrachinon (II) in Gegenwart eines alkalischen Kondensationshilfsmittels, eines Oxidationsmittels und eines cyclischen Harnstoffderivates bei 80 bis 150°C und anschließende Reinigung und/oder Chlorierung gefunden, welches dadurch gekennzeichnet ist, daß man als Harnstoffderivat N,N'-Dimethylpropylenharnstoff verwendet.

N,N'-Dimethylpropylenharnstoff 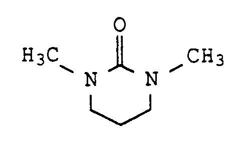
wird beim erfindungsgemäßen Verfahren in der Regel in Mengen von 0,05 bis 10 Gew.-Teilen, bevorzugt 0,1 bis 5 Gew.-Teilen, besonders bevorzugt 1 bis 3 Gew.-Teilen pro Gew.-Teil 1-Aminoanthrachinon (II) eingesetzt, gewünschtenfalls als Mischung mit einem inerten, organischen Lösungsmittel wie Dimethylsulfoxid, Pyridin, Toluol, Xylol oder Nitrobenzol.

Als alkalische Kondensationshilfsmittel können die üblicherweise für diesen Zweck verwendeten Basen wie Natriumhydroxid und insbesondere Kaliumhydroxid zum Einsatz kommen. Es kann als Feststoff oder bevorzugt als wäßrige Lösung, vorzugsweise 50 gew.-%ig, eingesetzt werden. Die verwendete Menge beträgt im allgemeinen 0,1 bis 10 Gew.-Teile, bevorzugt 0,2 bis 2,5 Gew.-Teile pro Gew.-Teil (II).

Als Oxidationsmittel eignen sich Luft, Sauerstoff, peroxidische Salze wie Perborate, Nitrate und Chlorate. Besonders günstig sind Luft oder Sauerstoff.

In einigen Fällen kann es von Vorteil sein, dem Reaktionsmedium ein Netzmittel zuzugeben, das unter den Reaktionsbedingungen nicht reagiert, z.B. Naphthalin- oder Alkylnaphthalinsulfonate oder sulfuriertes Oleinamid.

1-Aminoanthrachinon (II) kann als Pulver, als nasser Filterkuchen oder als Aufschlämmung eingesetzt werden, wobei der Aufschlämmung ein Teil oder das gesamte Kondensationshilfsmittel zugegeben werden kann.

Die Reaktionstemperatur beträgt beim erfindungsgemäßen Verfahren in der Regel 80 bis 150°C und hängt von der Menge an N,N'-Dimethylpropylenharnstoff ab.

Verfahrenstechnisch geht man zweckmäßigerweise so vor, daß man eine Mischung aus 1-Aminoanthrachinon (II) und N,N-Dimethylpropylenharnstoff vorlegt, auf etwa 90 bis 100°C erhitzt und dann das Kondensationshilfsmittel zugibt, wobei man Luft (etwa 200 bis 300 ml/min) durch das Reaktionsgemisch leitet. Nach beendeter Zugabe erhöht man die Temperatur vorzugsweise auf 120 bis 130°C, wobei ein Teil des Wassers abdestilliert.

Die Reaktion dauert im allgemeinen 4 bis 12 h. Das Ende der Umsetzung läßt sich in üblicher Weise durch Dünnschichtchromatographie bestimmen.

Die Aufarbeitung des Reaktionsgemisches auf das Indanthron (I) kann in bekannter Weise durch Ausfällen mit Wasser und Abfiltrieren vorgenommen werden. Dabei ergeben sich bei einem erfindungsgemäß hergestellten Produkt (I) im Vergleich zu einem nach der DE-A-34 22 385 erhaltenen Produkt erheblich verkürzte Filtrationszeiten.

N,N'-Dimethylpropylenharnstoff kann vorteilhaft durch Destillation oder Lösungsmittelextraktion aus der wäßrigen Phase zurückgewonnen und für weitere Umsetzungen eingesetzt werden.

Anschließend wird das Produkt (I) in der Regel einer üblichen reinigenden Nachbehandlung unterzogen. Dazu wird es zunächst in Wasser aufgeschlämmt und mit einem Reduktionsmittel wie Natriumdithionit in Gegenwart einer Base wie Natriumhydroxid zur Leukoform reduziert. Deren Natriumsalz kann dann wieder abfiltriert, mit Wasser gewaschen und an der Luft erneut zum Indanthron (I) oxidiert werden.

Sollen die chlorierten Indanthrone (Ia) hergestellt werden, so kann man ebenfalls nach einem der üblichen Chlorierungsverfahren vorgehen. Günstig ist die Chlorierung von Indanthron (I) in Schwefelsäure, die man im allgemeinen wie folgt vornimmt:
Das trockene oder das bei der Filtration erhaltene, noch feuchte Produkt (I) wird in Schwefelsäure gelöst, so daß sich eine Konzentration an Schwefelsäure von etwa 92 Gew.-% ergibt. Nach der Zugabe von geringen Mengen Mangandioxid als Katalysator wird Chlor durch die auf etwa 50 bis 55°C erhitzte Lösung geleitet. Nach beendeter Chlorierung wird das Reaktionsgemisch mit Wasser verdünnt, um eine Schwefelsäurekonzentration von etwa 83 Gew.-% einzustellen, und dann filtriert. Das Filtergut wird anschließend vollständig in 98 gew.-%iger Schwefelsäure gelöst und beispielsweise mit Aluminiumpulver reduziert, um die gewünschten Chlorindanthrone (Ia) zu ergeben.

Von Vorteil ist, daß das erfindungsgemäß hergestellte Indanthron (I) direkt in so guter Reinheit anfällt, daß man im allgemeinen auf eine reinigenden Nachbehandlung vor der Chlorierung verzichten kann.

Mit Hilfe des erfindungsgemäßen Verfahrens können also sowohl Indanthron (I) als auch seine Chlorderivate (Ia) in sehr guten Ausbeuten und hohen Reinheiten erhalten werden. Die mit ihnen erzielbaren Blaufärbungen zeichnen sich durch Farbtonreinheit und Brillanz aus. Von besonderem Vorteil ist, daß Indanthron (I) direkt in gut filtrierbarer Form anfällt und somit in wirtschaftlicher Weise nach kurzen Filtrationszeiten isoliert werden kann.

### Beispiele

### Herstellung von Indanthron (I) und Chlorindanthron (Ia)

### Beispiel 1

Eine Mischung aus 150 g 1-Aminoanthrachinon (97,5 %ig) und 230 g (220 ml) N,N'-Dimethylpropylenharnstoff wurde auf 95 bis 100°C erhitzt. Unter Hindurchleiten eines Luftstroms von 300 ml/min wurden dann 141 g einer 50 gew.-%igen Kalilauge in 3 h zugetropft. Anschließend wurde die Temperatur für 8 h auf 125 bis 130°C erhöht und ein Teil des Wassers abdestilliert. Das Ende der Umsetzung wurde dünnschichtchromatographisch (Abwesenheit von 1-Aminoanthrachinon) bestimmt.

Das Produkt (I) wurde durch Eintragen der Reaktionsmischung in 800 ml Wasser ausgefällt, abfiltriert und gewaschen. Die Filtrationszeit betrug 2,5 h.

Zur Reinigung wurde das Filtergut in eine Lösung von 152 g Natriumhydroxid in 4 900 ml Wasser eingerührt. Nach Zugabe von 83 g Natriumdithionit bei 60°C wurde die Mischung noch 20 min gerührt. Bei einer Temperatur von 50°C wurde das ausgefallene Natriumsalz des Leukoindanthrons abfiltriert, gewaschen und an der Luft oxidiert.

Es wurden 142 g Indanthron (I) erhalten, was einer Ausbeute von 98 % entspricht.

### Vergleichsbeispiel 1

Analog Beispiel 1 wurde die Kondensation von 150 g 1-Aminoanthrachinon (97,5 %ig) in 230 g (220 ml) 1,3 Dimethylimidazolidin-2-on durchgeführt.

Bei der Abtrennung des Produktes (I) ergab sich eine Filtrationsdauer von 60 h.

Bei der ebenfalls analog vorgenommenen Reinigung wurden 137 g Indanthron (I) erhalten, was einer Ausbeute von 95 % entspricht.

### Beispiel 2

In eine Lösung von 80 g Indanthron (I) aus Beispiel 1 in 800 g 92 gew.-%iger Schwefelsäure wurden nach Zugabe von 4 g Mangandioxid bei 50 bis 55°C 64 g Chlor in 10 h eingeleitet. Nach Eintragen der Reaktionsmischung in 104 g 75 gew.-%iger Schwefelsäure wurden 88 ml Wasser zugetropft, wobei die Temperatur unterhalb von 55°C gehalten wurde.

Nach Abkühlen auf Raumtemperatur wurde das ausgefällte Chlorierungsprodukt (Ia) abfiltriert und mit Wasser gewaschen.

Das Filtergut wurde dann in einer Mischung aus 228 g 96 gew.-%iger Schwefelsäure und 320 g Oleum (24 Gew.-% SO₃) gelöst. Nach Zugabe von 2,4 g Aluminiumpulver bei 50°C wurde die Mischung noch 1 h gerührt und dann in 2 000 ml Wasser eingetragen.

Das auf diese Weise ausgefällte Produkt (Ia) wurde abfiltriert, mit Wasser neutral gewaschen und getrocknet.

Es wurden 70 g Chlorindanthron mit einem Chlorgehalt von 6,9 Gew.-% (n=1) erhalten, was einer Ausbeute von 81 %, bezogen auf (I), entspricht.

### Beispiel 3

Analog Beispiel 1 wurden 102,6 g 1-Aminoanthrachinon (97,5 %ig) in Gegenwart von 200 g (190 ml) N,N'-Dimethylpropylenharnstoff zu Indanthron (I) kondensiert.

Das erhaltene Produkt (I) wurde jedoch keiner reinigenden Nachbehandlung unterzogen, sondern direkt analog Beispiel 2 chloriert.

Es wurden 103 g Chlorindanthron (Ia) mit einem Chlorgehalt von 7,2 Gew.-% (n=1) erhalten, was einer Ausbeute von 96 %, bezogen auf 1-Aminoanthrachinon, entspricht.

### Beispiel 4

Analog Beispiel 1 wurden 102,6 g 1-Aminoanthrachinon (97,5 %ig) in Gegenwart von 200 g (190 ml) N,N'-Dimethylpropylenharnstoff zu Indanthron (I) kondensiert.

Das erhaltene Produkt (I) wurde ohne weitere Reinigung zur Chlorierung eingesetzt.

Dazu wurde das erhaltene Filtergut in 760 g 91,5 gew.-%iger Schwefelsäure gelöst. In diese Lösung wurde bei 50 bis 55°C 155 g Chlor in 21 h eingeleitet. Dann wurden 110 ml Wasser zugetropft, wobei die Temperatur unter 55°C gehalten wurde.

Nach Abkühlen auf Raumtemperatur wurde das ausgefällte Chlorierungsprodukt (Ia) abfiltriert und mit 200 g 80 gew.-%iger Schwefelsäure gewaschen.

Zur Reinigung wurde das Filtergut in 440 g 98 gew.-%iger Schwefelsäure gelöst. Nach Zugabe von 2,2 g Aluminiumpulver bei 50°C wurde die Mischung bis zum Abklingen der exothermen Reaktion noch 30 min gerührt und dann in 800 ml Wasser eingetragen.

Das auf diese Weise ausgefällte Produkt (Ia) wurde abfiltriert, mit Wasser neutral gewaschen und getrocknet.

Es wurden 93 g Chlorindanthron mit einem Chlorgehalt von 13,6 Gew.-% (n=2) erhalten, was einer Ausbeute von 81 %, bezogen auf 1-Aminoanthrachinon, entspricht.

## Patentansprüche

1. Verfahren zur Herstellung von Dianthrachinon-N,N'-dihydroazin (I) 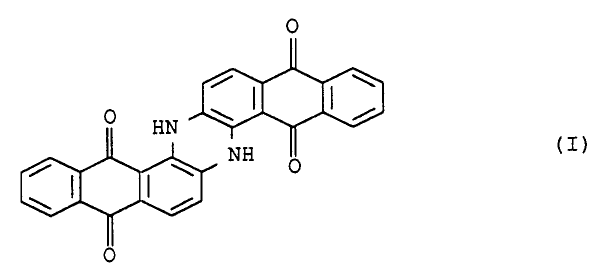 und dessen Chlorierungsprodukten (Ia) 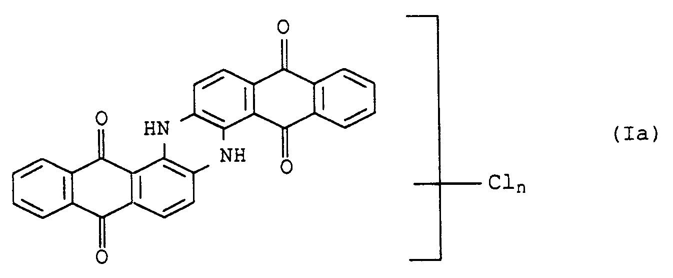 wobei n 1 oder 2 bedeutet, durch Kondensation von 1-Aminoanthrachinon (II) in Gegenwart eines alkalischen Kondensationshilfsmittels, eines Oxidationsmittels und eines cyclischen Harnstoffderivates bei 80 bis 150°C und anschließende Reinigung und/oder Chlorierung, dadurch gekennzeichnet, daß man als Harnstoffderivat N,N'-Dimethylpropylenharnstoff verwendet.

## Claims

1. A process for preparing dianthraquinone-N,N'-dihydroazine (I) 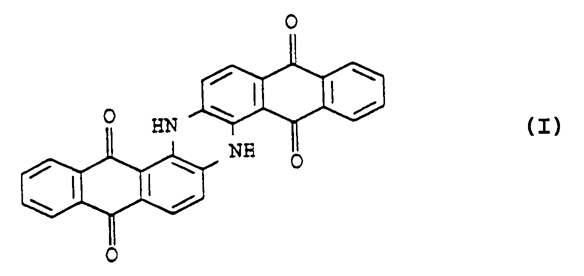 and its chlorination products (Ia) 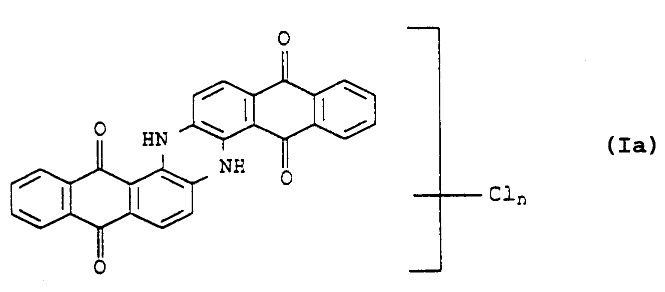 where n is 1 or 2, by condensation of 1-aminoanthraquinone (II) in the presence of an alkaline condensing aid, an oxidizing agent and a cyclic urea derivative at from 80 to 150°C and subsequent purification and/or chlorination, which comprises using N,N'-dimethylpropyleneurea as the urea derivative.

## Revendications

1. Procédé de préparation de la dianthraquinonyl-N,N'-dihydroazine (I) 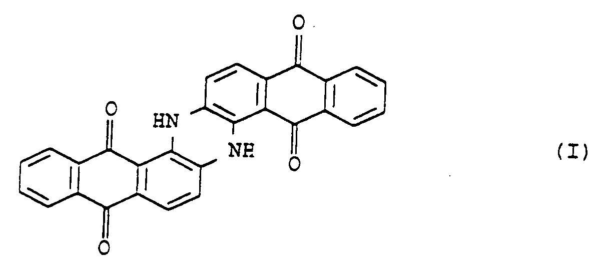 et de ses dérivés chlorés (Ia) 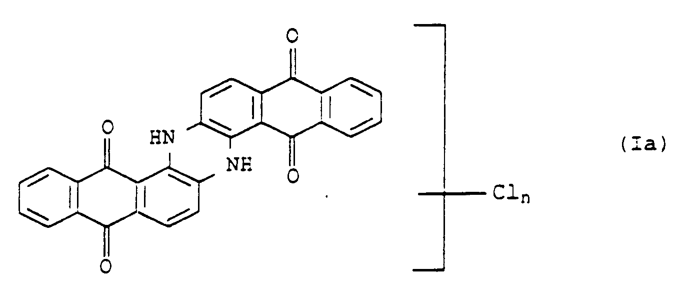 n étant mis pour 1 ou 2, par condensation de 1-aminoanthraquinone (II) en présence d'un agent auxiliaire de condensation alcalin, d'un oxydant et d'un dérivé cyclique de l'urée, à une température de 80 à 150°C, suivie de purification et/ou de chloration, caractérisé en ce que l'on utilise, comme dérivé de l'urée, de la N,N'-diméthylpropylène-urée.
